# EUROPEAN PATENT SPECIFICATION

(11) **EP 3 109 400 B1**
(45) Date of publication and mention of the grant of the patent: **06.11.2019**
(21) Application number: 16174572.4
(22) Date of filing: 15.06.2016
(51) Int. Cl.: E21B 47/022, G01V 11/00

(54) **DRILL SENSOR SYSTEM AND METHOD**
BOHRSENSORSYSTEM UND -VERFAHREN
PROCÉDÉ ET SYSTÈME DE DÉTECTION DE PERCEUSE

(30) Priority: 21.06.2015 US 201514745453
(43) Date of publication of application: 28.12.2016
(73) Proprietor: GE Global Sourcing LLC, Norwalk, CT 06851 (US)
(72) Inventor: FECHINE, Dmitri, Fountaindale, New South Wales 2258 (AU); HOFFMANN, Craig, Fountaindale, New South Wales 2258 (AU)
(74) Representative: Herrmann, Uwe

(56) References cited:
- EP-B1- 1 153 194
- US-A1- 2005 173 153
- US-A1- 2009 222 209
- US-A1- 2011 202 277
- US-A1- 2012 006 597

## Description

### FIELD

The invention disclosed herein relates to a drill sensor system and a corresponding method.

### BACKGROUND

US 2005/175153 A1 discloses an earth penetrating apparatus. An antenna arrangement is coupled to a radar unit and configured for transmitting and receiving signals in a relatively forward and/or lateral looking direction relative to a distal end of a cutting tool.

Drilling for some minerals, drilling for laying cable or other components, or other types of drilling can be accomplished using directional drilling. In directional drilling, an operator remotely controls the direction in which a drill creates a hole beneath a surface, such as the surface of the earth.

Because the operator is not in the hole, the operator cannot see the environment around a drill bit of the drill. Consequently, the drill may strike an obstacle, drill into a gas deposit (which may result in a gas outburst, or a sudden and violent eruption of minerals, gas, rocks, etc.), or otherwise operate the drill in an unsafe and/or inefficient manner. For example, the drill may need to be operated to avoid hitting the roof and/or floor of a deposit seam (e.g., rock above and/or below a coal seam). Hitting the roof and/or floor may require pulling the drill back away from the roof and/or floor and starting a new branch of a hole being drilled. In order to avoid striking gas deposits, some operators are required to take gas samples prior to drilling and/or drain the gases from the deposits prior to drilling. This can result in a significant amount of additional drilling that is required before the operator may drill for sought-after mineral deposits. US 2011202277 describes a method and system for generating a series of scans for a subsurface and creating derivative images from the scans to detect a subsurface object. Further disclosed is a down-hole radar unit proximate a boring tool. The boring tool houses an orientation sensor and/or a displacement rate sensor.

### BRIEF DESCRIPTION

In one embodiment, a system (e.g., a drill sensor system) includes a radar sensor and a magnetometer. The radar sensor is configured to be one or more of coupled to and/or disposed within a drill rod assembly having a drill head configured to drill a hole beneath a surface. The radar sensor also is configured to emit an electromagnetic wave and to obtain an echo of the electromagnetic wave in order to generate radar data representative of one or more objects beneath the surface. The magnetometer sensor is configured to be one or more of coupled to or disposed within the drill rod assembly, and to generate magnetometer data representative of an orientation of the magnetometer sensor relative to a magnetic field.

In another embodiment, a method (e.g., for generating navigation data for a drilling system) includes generating radar data representative of one or more objects beneath a surface based at least in part on an echo received by a radar sensor that is one or more of coupled to and/or disposed within a drill rod assembly having a drill head configured to drill a hole beneath the surface. The method also includes generating magnetometer data representative of an orientation of a magnetometer sensor relative to a magnetic field, where the magnetometer data is generated by the magnetometer sensor that is one or more of coupled to and/or disposed within the drill rod assembly.

In another embodiment, an assembly (e.g., a drill rod assembly) includes a drill head and a downhole housing. The drill head configured to drill a hole beneath a surface. The downhole housing is configured to be coupled with the drill head, and includes a radar sensor and a magnetometer sensor. The radar sensor is configured to emit an electromagnetic wave and to obtain an echo of the electromagnetic wave in order to generate radar data representative of one or more objects beneath the surface and outside of the downhole housing. The magnetometer sensor is configured to generate magnetometer data representative of an orientation of the drill head relative to a magnetic field.

### BRIEF DESCRIPTION OF THE DRAWINGS

Reference is made to the accompanying drawings in which particular embodiments and further benefits of the inventive subject matter are illustrated as described in more detail in the description below, in which:
Figure 1 is a schematic diagram of one embodiment of a drill sensor system;
Figure 2 illustrates a drill rod assembly of the sensor system shown in Figure 1 according to one embodiment;
Figure 3 is a schematic diagram of one embodiment of downhole equipment;
Figure 4 is a schematic diagram of another embodiment of downhole equipment;
Figure 5 is a schematic diagram of another embodiment of downhole equipment;
Figure 6 illustrates a cross-sectional view of one embodiment of a drill rod assembly;
Figure 7 illustrates a cross-sectional view of another embodiment of a drill rod assembly;
Figure 8 illustrates a cross-sectional view of another embodiment of a drill rod assembly;
Figure 9 illustrates one embodiment of a drilling system in operation;
Figure 10 illustrates a flowchart of one embodiment of a method for generating navigation data for a drilling system;
Figure 11 illustrates a graphical display of the computing assembly shown in Figure 1 according to one embodiment; and
Figure 12 illustrates a graphical display of the computing assembly shown in Figure 1 according to one embodiment.

### DETAILED DESCRIPTION

Embodiments of the subject matter described herein provide for systems and methods that combine two or more different types of sensors in a drill rod assembly of a drilling rig. The sensors can measure characteristics around the drill rod assembly while a drill head of the assembly drills a hole beneath a surface, such as beneath the surface of the earth. The sensors can generate data representative of these characteristics, and the data can be used to generate images of the volume outside of and/or around the drill rod assembly on a computing assembly on or above the surface.

In one aspect, the drill rod assembly can include a magnetometer sensor and a radar sensor in the drill rod assembly. The magnetometer sensor can generate magnetometer data representative of an orientation of the drill head relative to an external magnetic field. The radar sensor can generate radar data representative of locations, shapes, sizes, or the like, of objects outside of the drill rod assembly. Using a combination of the magnetometer data and the radar data to generate the images can provide for improved accuracy in directing the drill head in the ground for more precise drilling in areas where magnetometers may not operate properly due to the external magnetic interference. The data from the sensors can allow an operator of the drilling rig to see potential drilling targets and avoid obstacles in real time (e.g., the images can be generated at the same time that the drill head is drilling the hole).

The magnetometer sensor and the radar sensor (e.g., ground penetrating radar) can be packaged together in the same enclosure or housing in the drill rod assembly (enclosure and housing are used synonymously herein). Alternatively, the sensors may be in different enclosures or housings in the drill rod assembly. The sensors may be in or coupled with the drill rod assembly in locations that are closer to the drill head than the opposite end of the drill rod assembly. Alternatively, the sensors may be in another location. The sensors may share the same communication channel of a cable to communicate data to the computing assembly on or above the surface.

Technical effects achieved by embodiments of the inventive subject matter described herein include control of a drilling machine for drilling a hole, and increased accuracy in guiding where a drill head of a drill rod assembly moves while drilling a hole. This increased accuracy can improve the efficiency and/or safety of mining operations by allowing the drill rod assembly to reach deposits of interest (e.g., coal or other minerals being mined) and/or to avoid gas deposits that may pose a danger of explosion if the drill rod assembly were to drill into the gas deposits.

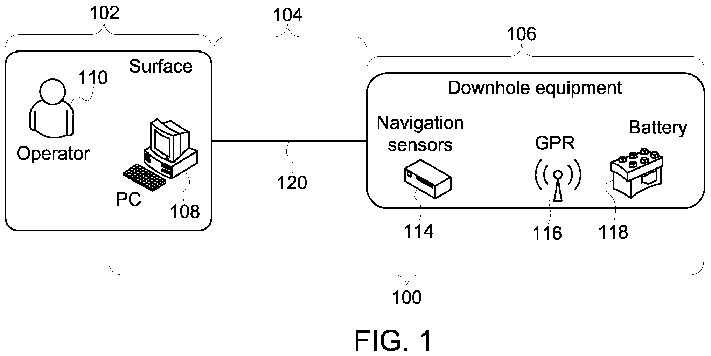

Figure 1 is a schematic diagram of one embodiment of a drill sensor system 100. The drill sensor system 100 includes surface equipment 102 ("Surface" in Figure 1), one or more communication components 104, and one or more downhole equipment 106. The surface equipment 102 may be disposed on or above a surface into which a drilling rig (not shown in Figure 1) digs a hole with the downhole equipment 106. The surface equipment 102 can include the drilling rig and a computing assembly 108, among other components. The computing assembly 108 can represent hardware circuitry that is connected with and/or includes one or more processors, one or more computer readable memories (e.g., computer hard drives, optical discs, random access memory, read only memory, or the like), one or more input devices (e.g., touchscreen, keyboard, microphone, or the like), and/or one or more output devices (e.g., the same or different touchscreen, a computer monitor, speaker, or the like). For example, the computing assembly 108 may include a laptop computer or other personal computer device and related peripherals. An operator 110 may use the computing assembly 108 to view objects around the downhole equipment 106 in a hole being drilled by the downhole equipment 106, to control movement of the downhole equipment 106, or the like.

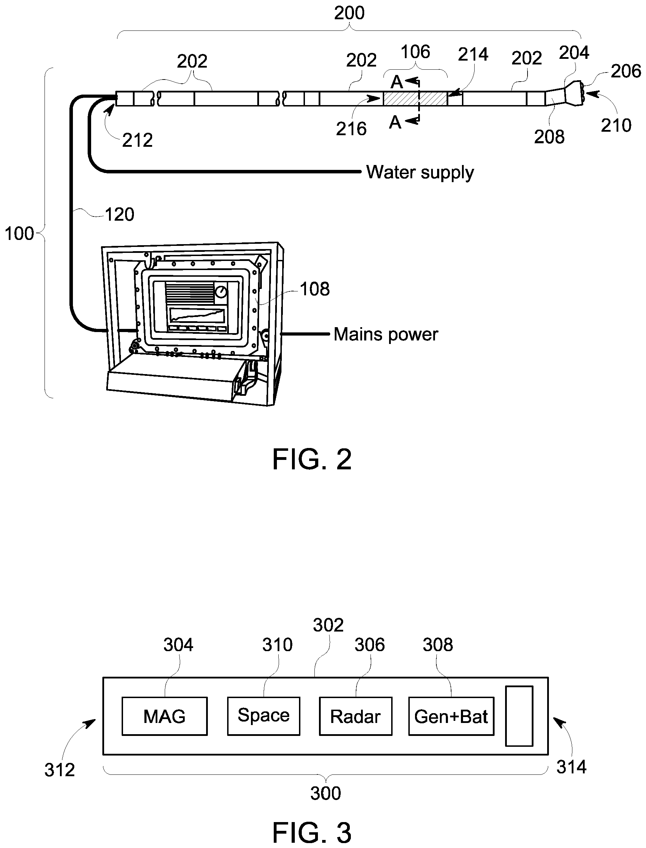

The downhole equipment 106 includes a drill rod assembly 200 (shown in Figure 2) having one or more navigation sensors 114, one or more radar sensors 116, and one or more power sources 118 in the drill rod assembly. The navigation sensors 114 can represent one or more of the same or different types of sensors. Sensors may be different types of sensors when the sensors measure different characteristics, use different techniques to measure the same or different characteristics, and/or generate data representative of different things. In one embodiment, the navigation sensors 114 represent at least one magnetometer sensor, such as a magnetometer. Optionally, the navigation sensors 114 can include at least one acceleration sensor, such as an accelerometer.

The navigation sensors 114 can be coupled with and/or disposed within a drill rod assembly 200 (shown in Figure 2). The sensors 114 can generate data representative of locations and/or orientations of the downhole equipment 106. For example, a magnetometer sensor can measure magnitudes and/or directions of an external magnetic field (e.g., the magnetic field of the earth) relative to positions of the magnetometer sensor, and generate data representative of where the magnetometer sensor is located relative to the external magnetic field. The magnetometer sensor can communicate this data to the computing assembly 108 as magnetometer data. The computing assembly 108 can use the magnetometer data to determine where the magnetometer sensor is located beneath the surface in which the hole is being drilled. An acceleration sensor can measure acceleration (e.g., proper acceleration, changes in acceleration, or the like) of the acceleration sensor and generate data representative of the acceleration. For example, this data can represent inclination of the sensor. This data can be communicated from the acceleration sensor to the computing assembly 108. The computing assembly 108 can use the acceleration data to determine the orientation of the acceleration sensor, such as the pitch, yaw, roll, or the like, of the acceleration sensor and to form one or more images or videos of the drill rod assembly 200. Optionally, the navigation sensors 114 can include one or more other sensors.

The radar sensor 116 emits electromagnetic waves and obtains echoes of the electromagnetic waves off objects beneath the surface and outside of the drill rod assembly 200. These objects can include mineral deposits (e.g., coal or other ore sought to be removed from the earth), interfaces between mineral deposits and other materials, interfaces between gas deposits and surrounding materials, etc. The radar sensor 116 generates radar data representative of locations, sizes, shapes, or the like, of these objects, and can communicate the radar data to the computing assembly 108. The computing assembly 108 can use this data to form images of the objects in the images or videos shown to the operator 110 via the computing assembly 108.

The power source 118 can represent one or more devices that provide power to the sensors 114, 116. The power source 118 can include one or more batteries, capacitors, generators, or the like, that supply electric current to the sensors 114, 116 to power the sensors 114, 116. In one embodiment, the power source 118 represents one or more 15 volt DC batteries, generators, or the like. Optionally, the power source 118 may include a cable connection to one or more generators, batteries, capacitors, fly wheels, utility grids, or the like, disposed on or above the surface. In another aspect, the power source 118 can provide 10 to 16 volts (or another amount) and/or 0.5 to one amp (or another amount) to power the sensors 114, 116.

The communication components 104 represent one or more communication devices that are used by the sensors 114, 116 to communicate data with the computing assembly 108. The communication components 104 can represent one or more cables 120 having one or more communication channels. The cables 120 can include a modular electrically connected cable assembly ("MECCA") that communicatively couples the computing assembly 108 with the sensors 114, 116. The sensors 114, 116 can communicate the data generated by the sensors 114, 116 as data packets. Alternatively, the cables 120 can include another type of cable or communication medium, and/or the cable 120 may communicate the data in a manner that does not use data packets. In another embodiment, the communication components 104 can include one or more wireless connections between the sensors 114, 116 and the computing assembly 108. The sensors 114, 116 can wirelessly communicate the data with the computing assembly 108. In an embodiment, the communication components 104 are configured, alternatively or additionally, for Ethernet communications.

A communication channel can represent a single cable, a single frequency, a band of frequencies, or the like, that is used to communicate the data from the sensors 114, 116 to the computing assembly 108. In one aspect, the sensors 114, 116 may share a single communication channel (e.g., a common communication channel) to communicate the different data generated by the sensors 114, 116 to the computing assembly 108.

In operation, the sensors 114, 116 measure characteristics around the drill rod assembly 200 (e.g., radar echoes, magnetic fields, accelerations, etc.) and generate data representative of these characteristics to the computing assembly 108. The sensors 114, 116 may generate and communicate this data at the same time that a drill head of the drill rod assembly 200 is cutting into material to drill a hole. The computing assembly 108 can generate images or video using the data from the sensors 114, 116 so that the operator 110 of the drill rig can visually see where the drill rod assembly 200 and/or drill head is relative to objects of interest, obstacles, or the like.

Figure 2 illustrates the drill rod assembly 200 of the sensor system 100 according to one embodiment. The drill rod assembly 200 includes one or more tubular segments 202 connected with each other and with a drill head 204. The drill head 204 can include a drill bit 206 that is rotated by a drill motor 208 in the drill head 204 to cut into material and form a hole. In the illustrated example, the drill rod assembly 200 extends between a distal end 210 that drills the hole and an opposite proximal end 212. The downhole equipment 106 is located closer to the distal end 210 and the drill head 204 than the proximal end 212. For example, the sensors 114, 116 (shown in Figure 1) may be two to three meters away from the drill head 204 and/or the distal end 210 of the drill rod assembly 200 such that the data generated by the sensors 114, 116 represents locations and/or orientations of the drill head 204. Alternatively, the computing assembly 108 (shown in Figure 1) may be provided with a distance between the sensors 114, 116 and the drill head 204, and generate the images and/or video using this distance to modify the location and/or orientation obtained from the sensor data so that the images and/or video more accurately reflect the location of the drill head 204.

The drill rod assembly 200 also may include a downhole enclosure or a downhole housing 205. In the illustrated embodiment, the downhole housing 205 is elongated between and extends from a distal end 214 to an opposite proximal end 216. The distal end 214 may face the distal end 210 of the drill rod assembly 200 and the proximal end 216 may face the proximal end 212 of the drill rod assembly 200. The distal end 214 of the housing 205 may be located closer to the distal end 210 of the drill rod assembly 200 than the proximal end 212 of the drill rod assembly 200 and the proximal end 216 of the housing 205 may be located closer to the proximal end 212 of the drill rod assembly 200 than the distal end 210 of the drill rod assembly 200.

Figure 3 is a schematic diagram of one embodiment of downhole equipment 300. The downhole equipment 300 shown in Figure 3 can represent the downhole housing 205 shown in Figure 2. The downhole equipment 300 includes a single outer housing or enclosure 302 (i.e., the housing or enclosure 302 is an embodiment of the housing 205 shown in Figure 2) with one or more navigation sensors 304 ("MAG" in Figure 3) and one or more radar sensors 306 ("RADAR" in Figure 3) disposed and contained within the housing 302. The one or more navigation sensors 304 can represent the navigation sensors 114 shown in Figure 1. For example, the navigation sensors 304 can include one or more magnetometer sensors, one or more accelerometer sensors, or the like. The one or more radar sensors 306 can represent one or more of the radar sensors 116 shown in Figure 1. A power source 308 ("GEN+BAT" in Figure 3), such as the power source 118 shown in Figure 1, may be included in the housing 302.

The housing 302 optionally may include open space 310. This space 310 may separate the sensors 304, 306 from each other to reduce or prevent interference between the sensors 304, 306. Alternatively, one or more other components may be disposed in the space 310.

The housing 302 may represent a single body that extends around and encloses the sensors 304, 306, power source 308, space 310, and the like. In one embodiment, the housing 302 may not be formed from two or more separate bodies having space between the bodies. For example, the housing 302 may be formed from two or more bodies that are connected with each other. The housing 302 extends between a distal end 312 and an opposite proximal end 314. The distal end 312 can represent the distal end 214 of the downhole equipment 106 shown in Figure 2 and the proximal end 314 can represent the proximal end 216 of the downhole equipment 106.

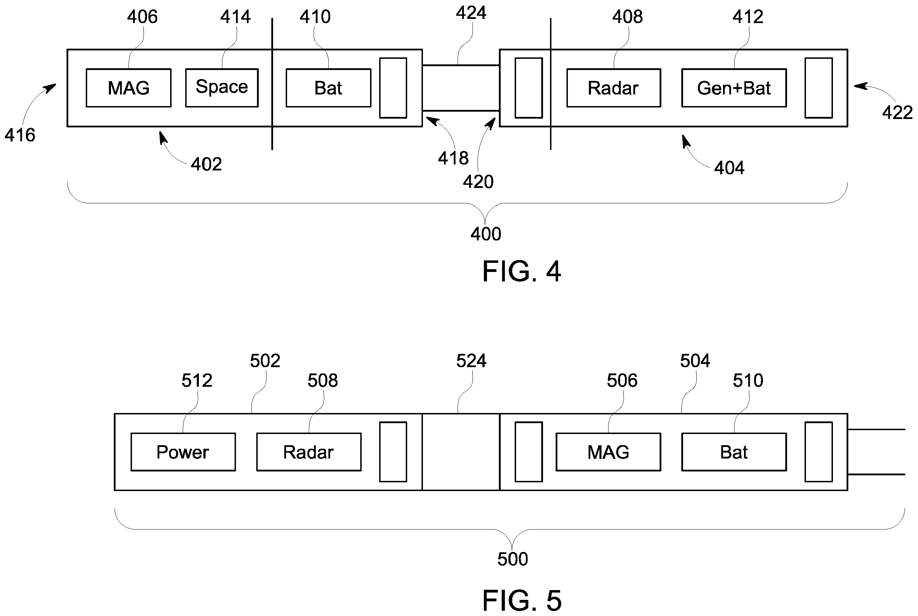

Figure 4 is a schematic diagram of another embodiment of downhole equipment 400. The downhole equipment 400 shown in Figure 4 can represent the downhole housing 205 shown in Figure 2. The downhole equipment 400 includes plural separate outer housings or enclosures 402, 404 with one or more navigation sensors 406 ("MAG" in Figure 4) and one or more radar sensors 408 ("RADAR" in Figure 4) disposed and contained within the housings 402, 404. One embodiment of a combination of the housings 402, 404 can represent the housing 205 shown in Figure 2.

The one or more navigation sensors 406 can represent the navigation sensors 114 shown in Figure 1 and the one or more radar sensors 408 can represent one or more of the radar sensors 116 shown in Figure 1. Power sources 410 ("BAT" in Figure 4) and 412 ("GEN+BAT" in Figure 4), such as two or more of the power sources 118 shown in Figure 1, may be included in the housings 402, 404. In one aspect, the power source 410 may be a 3.7 volt DC battery (or other type of battery or power source) that supplies electric power to the one or more navigation sensors 406 in the housing 402 while the power source 412 may supply electric power to the one or more radar sensors 408 in the housing 404. One or more of the housings 402, 404 may include open space 414, similar to the space 310 shown in Figure 3.

The housings 402, 404 may represent two or more bodies that extend around and enclose the sensors 406, 408, power sources 410, 412, space 414, and the like. In one embodiment, the one or more navigation sensors 406, space 414, and the power source 410 are disposed within the housing 402 while the one or more radar sensors 408 and power source 412 are disposed within the housing 404. Alternatively, one or more of the sensors 406, 408, power sources 410, 412, and/or space 414 may be in the other housing 402, 404. While the downhole equipment 400 is shown as including two housings 402, 404, alternatively, the equipment 400 may include more than two housings 402, 404.

The housing 402 may be referred to as a distal housing as the housing 402 is closer to the distal end 210 of the drill rod assembly 200 shown in Figure 2 than the housing 404. The housing 404 can be referred to as the proximal housing as the housing 404 is closer to the proximal end 212 of the drill rod assembly 200 shown in Figure 2 than the housing 402. The housing 402 extends between a distal end 416 and an opposite proximal end 418. The distal end 416 of the distal housing 402 can represent the distal end 214 of the downhole equipment 106 shown in Figure 2. The housing 404 extends between a distal end 420 and an opposite proximal end 422. The proximal end 422 of the proximal housing 404 can represent the proximal end 216 of the downhole equipment 106.

In the illustrated embodiment, the one or more navigation sensors 406 are disposed closer to the distal end 210 and the drill head 204 of the drill rod assembly 200 shown in Figure 2 than the one or more radar sensors 408. Alternatively, the one or more radar sensors 408 may be disposed closer to the distal end 210 and the drill head 204 of the drill rod assembly 200 shown in Figure 2 than the one or more navigation sensors 406.

The proximal end 418 of the distal housing 402 can face the distal end 420 of the proximal housing 404. The housings 402, 404 may be spaced apart from each other such that the proximal end 418 of the distal housing 402 does not engage or otherwise contact the distal end 420 of the proximal housing 404. Alternatively, the proximal end 418 of the distal housing 402 can engage or otherwise contact the distal end 420 of the proximal housing 404. One or more cables 424 can extend between the housings 402, 404. The cable 424 shown in Figure 4 can represent one or more of the cables 120 shown in Figure 1. In one embodiment, the cable 424 can represent a MECCA that can communicate data from one or more of the sensors 406, 408 to the computing assembly 108 (shown in Figure 1) (and/or between the sensors 406, 408) at a rate of at least 38 kilobits per second (or another rate). The cable 424 may be connected with the computing assembly 108 or may be connected with one or more other cables that are connected with the computing assembly 108.

Figure 5 is a schematic diagram of another embodiment of downhole equipment 500. The downhole equipment 500 shown in Figure 5 can represent the downhole equipment 106 shown in Figures 1 and 2. Similar to the downhole equipment 400, the downhole equipment 500 includes a plural separate outer housings or enclosures 502, 504 with one or more navigation sensors 506 ("MAG" in Figure 5), one or more radar sensors 408 ("RADAR" in Figure 5), and one or more power sources 510, 512 ("POWER" and "BAT" in Figure 5). The one or more navigation sensors 506 can represent the one or more navigation sensors 406 shown in Figure 4, the one or more radar sensors 508 can represent the one or more radar sensors 408 shown in Figure 4, the power source 510 can represent the power source 410 shown in Figure 4, and the power source 512 can represent the power source 412 shown in Figure 4.

The housings 502, 504 may be connected by one or more intermediate components 524, such as one or more other housings, one or more cables, or the like. Alternatively, the housings 502, 504 may not be connected by any other components or bodies. In contrast to the downhole equipment 400 shown in Figure 4, the housing 502 of the downhole equipment 500 shown in Figure 5 may include the one or more radar sensors 508 and be located closer to the distal end 210 and the drill head 204 of the drill rod assembly 200 shown in Figure 2 than the housing 504 that includes the one or more navigation sensors 506.

The housings 205, 302, 402, 404, 502, 504 shown in Figures 2 through 5 may be disposed inside the drill rod assembly 200 such that outer exterior surfaces of the housings do not form part of the outer exterior surface of the drill rod assembly 200. The drill rod assembly 200 may have an outer wall (e.g., a cylindrical wall) such that the housing or housings are disposed within and enclosed by the outer wall of the drill rod assembly 200. Alternatively, one or more of the housings may be disposed within the drill rod assembly 200 but may form part of the outer exterior surface of the drill rod assembly 200. For example, the outer exterior surface of one or more of the housings may form part of the outer exterior surface of the drill rod assembly 200.

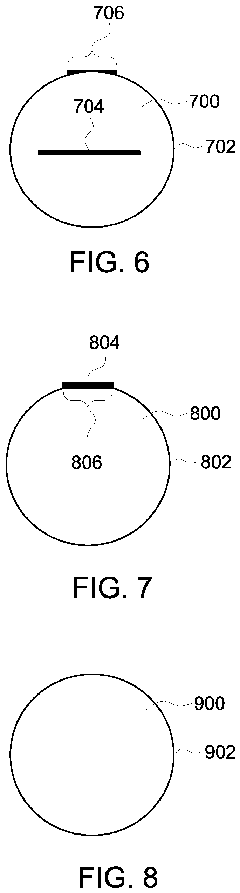

Figure 6 illustrates a cross-sectional view of one embodiment of a drill rod assembly 700. The drill rod assembly 700 can represent the drill rod assembly 200 shown in Figure 2. For example, the cross-sectional view of the drill rod assembly 700 may be through line A-A in Figure 2. The drill rod assembly 700 includes an exterior outer surface 702 having a radial transmission window 706 in the outer surface 702. The transmission window 706 can be formed from a material that is different from the material used to form the outer surface 702. For example, the transmission window 706 can be formed from a dielectric material while the outer surface 702 is formed from a metal or metal alloy. The transmission window 706 reflects less (or none) of the electromagnetic waves transmitted by a radar sensor than the material of the outer surface 702.

An antenna 704 of one or more of the radar sensors 116 can be disposed within the drill rod assembly 700. The antenna 704 is spaced apart from the window 706 and is oriented to direct electromagnetic waves through the window 706 and to receive echoes of the backscattered waves through the window 706 to generate the radar data.

Figure 7 illustrates a cross-sectional view of another embodiment of a drill rod assembly 800. The drill rod assembly 800 can represent the drill rod assembly 200 shown in Figure 2. For example, the cross-sectional view of the drill rod assembly 800 may be through line A-A in Figure 2. The drill rod assembly 800 includes an exterior outer surface 802 having an opening 806.

An antenna 804 of one or more of the radar sensors 116 can be disposed within the opening 806 of the drill rod assembly 800. The antenna 804 can be in the opening 806 such that the antenna 804 forms a transmission window of the drill rod assembly 800. In one aspect, the antenna 804 may be encased or otherwise in protective material that fills the opening 806. For example, the antenna 804 may be inside a block of dielectric material that fills the opening 806. The antenna 804 can then direct electromagnetic waves away from the drill rod assembly 800 and receive echoes of the backscattered waves to generate the radar data.

Figure 8 illustrates a cross-sectional view of another embodiment of a drill rod assembly 900. The drill rod assembly 900 can represent the drill rod assembly 200 shown in Figure 2. For example, the cross-sectional view of the drill rod assembly 900 may be through line A-A in Figure 2. The drill rod assembly 900 includes an antenna 902 that forms part or the entire outer circumference of the drill rod assembly 900. For example, the antenna 902 may be in the shape of a ring, cylinder, or tube and can form the entire outer surface of the drill rod assembly 900 along line A-A. Alternatively, the antenna 902 may be in the shape of an arc and form part, but not all, of the outer circumference of the drill rod assembly 900 along line A-A. In one aspect, the antenna 902 may be encased or otherwise in protective material, such as dielectric material. The antenna 902 can direct electromagnetic waves away from the drill rod assembly 900 and receive echoes of the backscattered waves to generate the radar data.

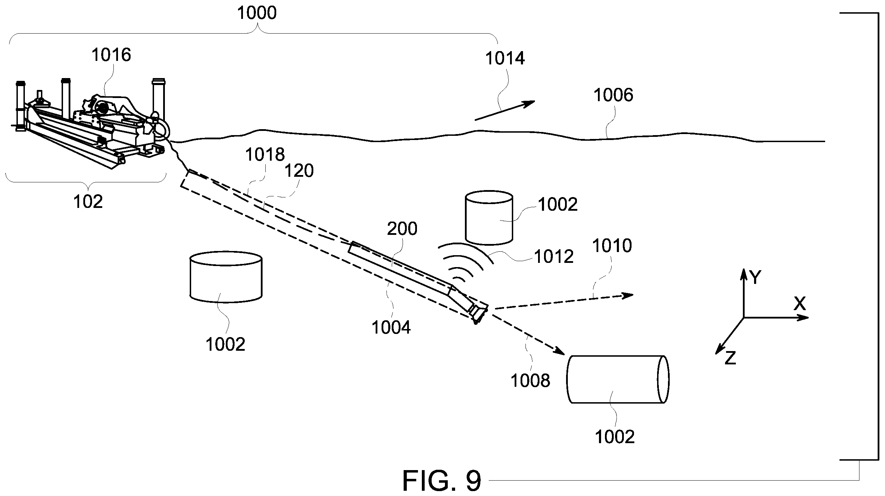

Figure 9 illustrates one embodiment of a drilling system 1000 in operation. The drilling system 1000 includes the drill rod assembly 200 operably connected with a drilling rig 1016. The drilling rig 1016 can control operation of the drill rod assembly 200, such as by including the computing assembly 108 or another device that controls the direction in which the drill rod assembly 200 drills a hole 1018 into a surface 1006, such as the surface of the earth. The computing assembly 108 shown in Figure 1 may be disposed onboard the drilling rig 1016 or may be located elsewhere.

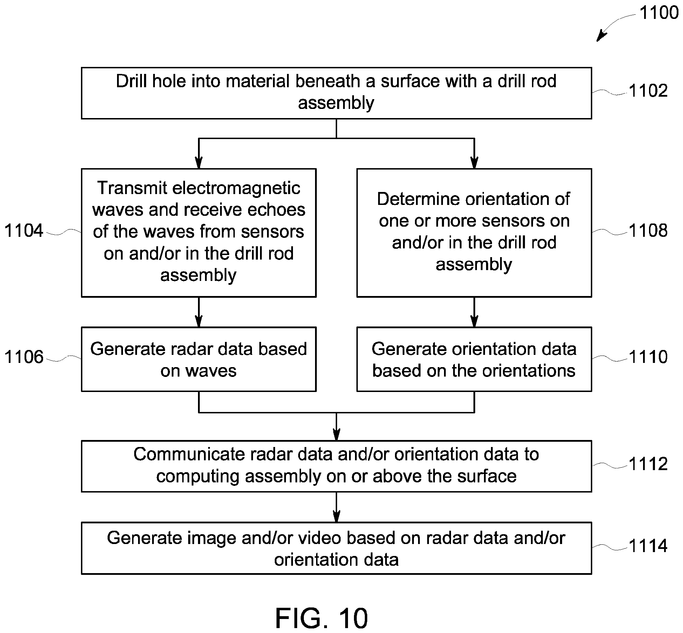

During drilling of the hole 1018, the navigation sensors 114 (shown in Figure 1) can determine orientations of the drill head 204 (shown in Figure 2) of the drill rod assembly 200, of the drill rod assembly 200, and/or of the sensors 114. For example, the navigation sensors 114 can include magnetometers that determine orientations of the magnetometers relative to a direction 1014 of an external magnetic field, such as the magnetic field of the earth. The navigation sensors 114 can include accelerometers that determine inclinations of the sensors 114, such as the pitch, yaw, and/or roll of the sensors 114 relative to one or more axes (e.g., the x-, y-, and z-axes shown in Figure 10 or other axes). The orientations of the sensors 114 can represent the orientations of the drill head 204 and/or drill rod assembly 200. The sensors 114 can communicate data representative of these orientations to the computing assembly 108 via the one or more cables 120 at the same time that the drill rod assembly 200 is drilling the hole 1018.

One or more of the radar sensors 116 can emit electromagnetic waves 1012 into the volume beneath the surface 1006 that is outside of the drill rod assembly 200. The waves 1012 can reflect off objects 1002 (e.g., mineral deposits, gas deposits, or the like) and/or interfaces between the objects 1002 and the material in which the objects are located (e.g., the earth, soil, rocks, etc.). The reflected waves can be measured by the radar sensors 116 as backscattered echoes. Based on a time of flight of one or more of the waves 1012 (e.g., the time between transmission of a wave 1012 and receipt of an echo of that wave 1012), the radar sensors 116 can generate radar data. This radar data can represent how far the objects 1002 are from the radar sensors 116 (and/or the drill rod assembly 200) so that locations, sizes, or the like, of the objects 1002 can be determined. Similar to the data provided by the navigation sensors 114, the radar data can be generated and communicated to the computing assembly 102 at the same time that the hole 1004 is being drilled by the drill head 204 of the drill rod assembly 200.

The computing assembly 108 receives the data from the sensors 114, 116 and can generate one or more images or video representative of locations of the objects 1002. In some embodiments, the objects 1002 may be obstacles that the operator 110 of the drilling system 1000 is trying to avoid drilling into, such as gas deposits that may explode, minerals that could damage the drill head, or the like. The operator 110 can use the images and/or video to guide the drill rod assembly 200 away from the obstacles. For example, if the drill head 204 is drilling the hole 1018 along a direction 1008 oriented toward an obstacle 1002, the operator 110 can see the obstacle 1002 on the computing assembly 108 and change the direction of drilling. The operator 110 can direct the drill head 204 to begin drilling in another, different direction 1010 that is oriented away from the obstacle. Optionally, one or more of the objects 1002 may be a mineral deposit that the operator 110 of the drilling system 1000 is trying to drill toward. The operator 110 can use the images and/or video to then guide the drill rod assembly 200 toward the deposit.

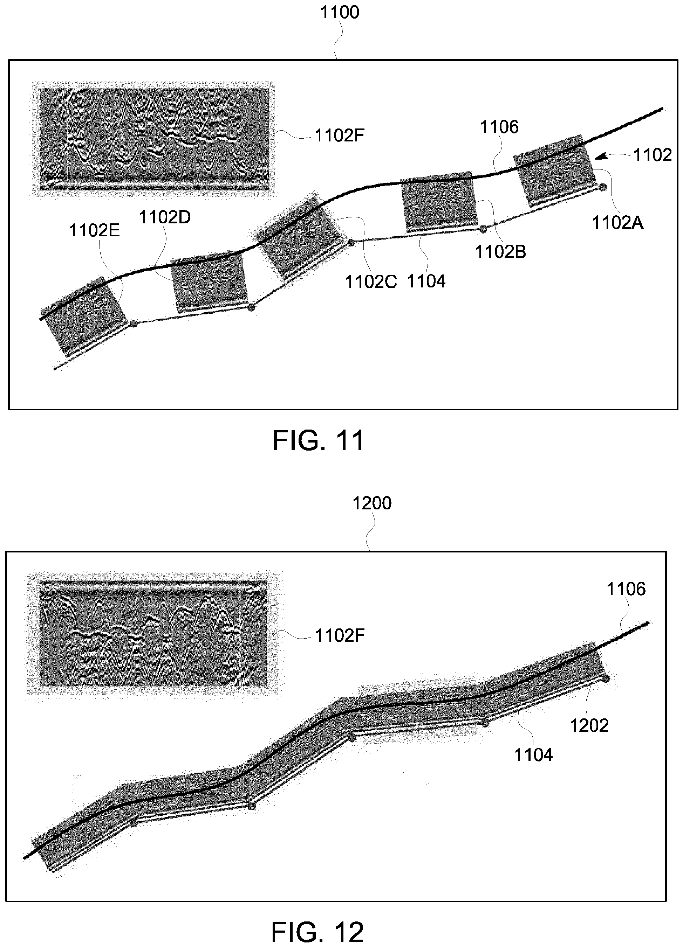

Figure 11 illustrates a graphical display 1300 of the computing assembly 108 shown in Figure 1 according to one embodiment. Optionally, the display 1300 may be shown on another computing assembly, display device, or the like. The display 1300 presents examples of images and/or video that represent the radar data and orientation data (e.g., data from the magnetometer sensors, accelerometers, or the like) obtained by the sensor system 100 shown in Figure 1. The display 1300 may be generated by the computing assembly 108 using the radar data and/or orientation data during drilling of the hole.

The display 1300 includes several radar images 1302 (e.g., images 1302A-F) representative of the radar data obtained by the radar sensor or sensors 116. One or more of the radar images 1302 (e.g., the image 1302C) can be selected (e.g., using an input device of the computing assembly 108, such as a keyboard, electronic mouse, stylus, touchscreen, or the like) as a selected image 1302F. The selected image 1302 may be shown in an enlarged form as shown in Figure 11.

The radar images 1302 represent magnitudes of the echoes measured by the radar sensor or sensors 116. The display 1300 also includes a trajectory object 1304 representative of where the drill rod assembly 200 (shown in Figure 2) has moved, is moving, and/or is moving toward beneath the surface during drilling of the hole. The trajectory object 1304 can be based on the orientation data provided by the navigation sensor or sensors 114.

The computing assembly 108 can examine the radar data to determine where an interface 1306 between two or more different materials (and/or between a material and open space) is located beneath the surface and outside of the hole being drilled. For example, the interface 1306 can represent the roof or upper part of a coal seam. The computing assembly 108 can present the interface 1306 in locations on the display 1300 that are based on where the trajectory object 1306 is located and how far the electromagnetic waves emitted by the radar sensor or sensors 116 travel before being backscattered toward the radar sensor or sensors 116.

The display 1300 may be presented to illustrate the radar data and/or orientation data during selective surveying of the material around a hole being drilled. Selective surveying may involve obtaining radar data at discrete times, and not continually. A result of this selective measuring of the radar data includes separate radar images 1302 being generated, with the radar images 1302 not being connected with each other. The radar images 1302 are shown in locations on the display 1300 that correspond with where the associated radar data was obtained along the trajectory of the drill rod assembly 200. Because radar data may not be obtained when the radar sensor or sensors 116 are at various locations along the trajectory of the drill rod assembly 200, radar images 1302 may not be generated for these locations along the length of the trajectory object 1304.

Figure 12 illustrates a graphical display 1200 of the computing assembly 108 shown in Figure 1 according to one embodiment. Optionally, the display 1200 may be shown on another computing assembly, display device, or the like. The display 1200 presents examples of images and/or video that represent the radar data and orientation data (e.g., data from the magnetometer sensors, accelerometers, or the like) obtained by the sensor system 100 shown in Figure 1. The display 1200 may be generated by the computing assembly 108 using the radar data and/or orientation data during drilling of the hole.

In contrast to the display 1300, the display 1200 includes a continuous radar image 1202. In contrast to the selective surveying shown in the display 1300 of Figure 11, the radar sensor or sensors 116 may have been repeatedly or continually obtaining radar data during drilling of the hole. As a result, the radar image 1202 represents continuous surveying and extends along all or most of the trajectory object 1104 of the drill rod assembly 200 in the display 1200. A portion of the radar image 1202 can be selected (e.g., using an input device of the computing assembly 108, such as a keyboard, electronic mouse, stylus, touchscreen, or the like) as the selected image 1302F that can be shown in an enlarged form as shown in Figure 12.

Figure 10 illustrates a flowchart of one embodiment of a method 1100 for generating navigation data for a drilling system. The method 1100 may be practiced by the drilling system 1000 shown in Figure 9 and/or the drill sensor system 100 shown in Figure 1. At 1102, a hole is drilled into material beneath a surface with a drill rod assembly. For example, the drill head 204 of the drill rod assembly 200 shown in Figure 2 can cut a hole 1018 (shown in Figure 9) into the earth. At 1104, electromagnetic waves are transmitted from one or more radar sensors disposed on and/or in the drill rod assembly. Reflections of these waves off of objects, interfaces with objects and the material surrounding the objects, or the like, are received by the one or more radar sensors. The waves can be transmitted and the echoes received while the hole 1018 is being drilled.

At 1106, radar data is generated based on the waves that are transmitted and/or the echoes that are received. The radar data can indicate times of flight of the waves, magnitudes (e.g., strengths) of the echoes, distances to the objects and/or interfaces, or the like. At 1108, the orientation of one or more navigation sensors that are on and/or in the drill rod assembly is determined. The orientation can include the inclination of a sensor, the drill rod assembly, the drill head, or the like and/or the orientation of the sensor, assembly, drill head, or the like, relative to a magnetic field, such as the earth's magnetic field. At 1110, orientation data that is representative of the orientation can be generated. The navigation sensors can generate the orientation data while the hole is being drilled by the drill rod assembly. In one embodiment, the waves are transmitted, echoes of the waves are received, the radar data is generated, the orientation is determined, and/or the orientation data is generated concurrently with each other and/or with drilling of the hole.

At 1112, the radar data and/or orientation data are communicated from the drill rod assembly to a computing assembly on or above the surface. For example, this data can be communicated to the computing assembly 108 shown in Figure 1 that is onboard the drilling rig 1016 shown in Figure 10 via one or more cables 120 (shown in Figure 1), wirelessly, or in another manner. At 1114, the computing assembly that received the radar and/or orientation data can generate one or more images and/or video for display to the operator of the drilling system. The images and/or video can represent where objects are located beneath the surface so that the operator can direct the drill rod assembly away from or toward the objects.

In one embodiment, a system (e.g., a drill sensor system) includes a radar sensor and a magnetometer. The radar sensor is configured to be one or more of coupled to and/or disposed within a drill rod assembly having a drill head configured to drill a hole beneath a surface. The radar sensor also is configured to emit an electromagnetic wave and to obtain an echo of the electromagnetic wave in order to generate radar data representative of one or more objects beneath the surface. The magnetometer sensor is configured to be one or more of coupled to or disposed within the drill rod assembly, and to generate magnetometer data representative of an orientation of the magnetometer sensor relative to a magnetic field.

In one aspect, the system also can include a computing assembly configured to be communicatively coupled with the radar sensor and the magnetometer sensor. The computing assembly can be configured to generate image data based on a combination of the radar data and the magnetometer data, where the image data is representative of a volume beneath the surface and outside of the hole.

In one aspect, the computing assembly is configured to generate the image data concurrently with the drill head drilling the hole beneath the surface.

In one aspect, the system also can include a communication cable configured to communicatively link both the radar sensor and the magnetometer sensor with the computing assembly via a common communication channel of the communication cable.

In one aspect, the radar sensor can be configured to generate the radar data and the magnetometer sensor can be configured to generate the magnetometer data concurrently with the drill head drilling the hole beneath the surface. For example, both the radar sensor generates the radar data and the magnetometer sensor generates the magnetometer data at the same time while the hole is being drilled.

In one aspect, the system also includes an accelerometer sensor configured to be one or more of coupled to or disposed within the drill rod assembly, the accelerometer sensor configured to generate acceleration data representative of an inclination of the accelerometer sensor.

In one aspect, the radar sensor can include a ground penetrating radar sensor configured to emit the electromagnetic wave to penetrate through material beneath the surface.

In one aspect, the system also can include a single housing configured to be disposed inside the drill rod assembly. Both the radar sensor and the magnetometer sensor can be configured to be disposed inside the single housing.

In one aspect, the system also can include a first housing and a second housing that is separate from the first housing. The first and second housings can be configured to be disposed inside the drill rod assembly, where the radar sensor is configured to be disposed inside the first housing and the magnetometer sensor is configured to be disposed inside the second housing.

In one aspect, the radar sensor and the magnetometer sensor can be configured to be disposed in the hole and beneath the surface while the radar sensor generates the radar data and the magnetometer sensor generates the magnetometer data.

In one aspect, the drill rod assembly can extend between a distal end and a proximal end, with the distal end including the drill head and configured to drill the hole beneath the surface and the proximal end configured to be operatively coupled with a drill rig above the surface. Both the radar sensor and the magnetometer sensor can be configured to be located closer to the distal end of the drill rod assembly than the proximal end of the drill rod assembly.

In another embodiment, a method (e.g., for generating navigation data for a drilling system) includes generating radar data representative of one or more objects beneath a surface based at least in part on an echo received by a radar sensor that is one or more of coupled to and/or disposed within a drill rod assembly having a drill head configured to drill a hole beneath the surface. The method also includes generating magnetometer data representative of an orientation of a magnetometer sensor relative to a magnetic field, where the magnetometer data is generated by the magnetometer sensor that is one or more of coupled to and/or disposed within the drill rod assembly.

In one aspect, the method also can include generating image data based on a combination of the radar data and the magnetometer data. The image data can be representative of a volume beneath the surface and outside of the hole.

In one aspect, the image data can be generated concurrently with the drill head drilling the hole beneath the surface.

In one aspect, the method also can include communicating the radar data and the magnetometer data from the radar sensor and the magnetometer sensor to a computing assembly that generates the image data via a common communication channel.

In one aspect, generating the radar data and generating the magnetometer data can occur concurrently with the drill head drilling the hole beneath the surface.

In one aspect, the method also can include generating acceleration data representative of an inclination of an accelerometer sensor that is one or more of coupled to or disposed within the drill rod assembly.

In another embodiment, an assembly (e.g., a drill rod assembly) includes a drill head and a downhole housing. The drill head configured to drill a hole beneath a surface. The downhole housing is configured to be coupled with the drill head, and includes a radar sensor and a magnetometer sensor. The radar sensor is configured to emit an electromagnetic wave and to obtain an echo of the electromagnetic wave in order to generate radar data representative of one or more objects beneath the surface and outside of the downhole housing. The magnetometer sensor is configured to generate magnetometer data representative of an orientation of the drill head relative to a magnetic field.

In one aspect, the radar sensor and the magnetometer sensor can be configured to be communicatively coupled with a computing assembly that is configured to generate image data based on a combination of the radar data and the magnetometer data. The image data can be representative of a volume beneath the surface and outside of the hole.

In one aspect, the radar sensor can be configured to generate the radar data and the magnetometer sensor can be configured to generate the magnetometer data concurrently with the drill head drilling the hole beneath the surface.

## Claims

1. A system (100) comprising:
a radar sensor (116; 306; 408; 508) configured to be one or more of coupled to or disposed within a drill rod assembly (200; 700; 800; 900) having a drill head (204) configured to drill a hole (1018) beneath a surface (1006), the radar sensor (116; 306; 408; 508) configured to emit an electromagnetic wave and to obtain an echo of the electromagnetic wave in order to generate radar data representative of one or more objects (1002) beneath the surface (1006); and
a magnetometer sensor (114; 304; 406; 506) configured to be one or more of coupled to or disposed within the drill rod assembly (200; 700; 800; 900),
the magnetometer sensor (114; 304; 406; 506) is configured to generate magnetometer data representative of an orientation of the magnetometer sensor (114; 304; 406; 506) relative to a magnetic field, .
further comprising a computing assembly (108) configured to be communicatively coupled with the radar sensor (116; 306; 408; 508) and the magnetometer sensor (114; 304; 406; 506), **characterized in that** the computing assembly (108) is configured to generate image data based on a combination of the radar data and the magnetometer data, the image data representative of a volume beneath the surface (1006) and outside of the hole (1018).

2. The system (100) of claim 1, wherein the computing assembly (108) is configured to generate the image data concurrently with the drill head (204) drilling the hole (1018) beneath the surface (1006).

3. The system (100) of any preceding claim, wherein the radar sensor (116; 306; 408; 508) is configured to generate the radar data and the magnetometer sensor (114; 304; 406; 506) is configured to generate the magnetometer data concurrently with the drill head (204) drilling the hole (1018) beneath the surface (1006).

4. The system (100) of any preceding claim, further comprising an accelerometer sensor (114; 304; 406; 506) configured to be one or more of coupled to or disposed within the drill rod assembly (200; 700; 800; 900), the accelerometer sensor (114; 304; 406; 506) configured to generate acceleration data representative of an inclination of the accelerometer sensor (114; 304; 406; 506).

5. The system (100) of any preceding claim, further comprising a single housing (205; 302) configured to be disposed inside the drill rod assembly (200; 700; 800; 900), wherein both the radar sensor (116; 306; 408; 508) and the magnetometer sensor (114; 304; 406; 506) are configured to be disposed inside the single housing (205; 302).

6. The system (100) of any preceding claim, further comprising a first housing (205; 402; 502) and a second housing (205; 404; 504) that is separate from the first housing (205; 402; 502), the first and second housings (205; 402, 404; 502, 504) configured to be disposed inside the drill rod assembly (200; 700; 800; 900), wherein the radar sensor (116; 306; 408; 508) is configured to be disposed inside the first housing (205; 402; 502) and the magnetometer sensor (114; 304; 406; 506) is configured to be disposed inside the second housing (205; 404; 504).

7. The system (100) of any preceding claim, wherein the radar sensor (116; 306; 408; 508) and the magnetometer sensor (114; 304; 406; 506) are configured to be disposed in the hole (1018) and beneath the surface (1006) while the radar sensor (116; 306; 408; 508) generates the radar data and the magnetometer sensor (114; 304; 406; 506) generates the magnetometer data.

8. The system (100) of any preceding claim, wherein the drill rod assembly (200; 700; 800; 900) extends between a distal end (206) and a proximal end (212), the distal end (206) including the drill head (204) and configured to drill the hole (1018) beneath the surface (1006), the proximal end (212) configured to be operatively coupled with a drill rig above the surface (1006), wherein both the radar sensor (116; 306; 408; 508) and the magnetometer sensor (114; 304; 406; 506) are configured to be located closer to the distal end (206) of the drill rod assembly (200; 700; 800; 900) than the proximal end (212) of the drill rod assembly (200; 700; 800; 900).

9. A drill rod assembly (200) comprising:
a drill head (204) configured to drill a hole beneath a surface; and
a downhole housing (205) configured to be coupled with the drill head, the downhole housing including a system (100) of any preceding claim.

10. A method comprising:
generating radar data representative of one or more objects (1002) beneath a surface (1006) based at least in part on an echo received by a radar sensor (116; 306; 408; 508) that is one or more of coupled to or disposed within a drill rod assembly (200; 700; 800; 900) having a drill head (204) configured to drill a hole (1018) beneath the surface (1006); and
generating magnetometer data using a magnetometer sensor (114; 304; 406; 506), wherein the magnetometer data is generated by the magnetometer sensor (114; 304; 406; 506) that is one or more of coupled to or disposed within the drill rod assembly (200; 700; 800; 900),
the generated magnetometer data is representative of an orientation of the magnetometer sensor (114; 304; 406; 506) relative to a magnetic field, **characterized in** generating image data based on a combination of the radar data and the magnetometer data, the image data representative of a volume beneath the surface (1006) and outside of the hole (1018).

11. The method of claim 10, wherein the image data is generated concurrently with the drill head (204) drilling the hole (1018) beneath the surface (1006).

12. The method of any of claims 10 or 11, further comprising communicating the radar data and the magnetometer data from the radar sensor (116; 306; 408; 508) and the magnetometer sensor (114; 304; 406; 506) to a computing assembly (108) that generates the image data via a common communication channel.

13. The method of any of claims 10 to 12, wherein generating the radar data and generating the magnetometer data occurs concurrently with the drill head (204) drilling the hole (1018) beneath the surface (1006).

## Patentansprüche

1. System (100), aufweisend:
einen Radarsensor (116; 306; 408; 508), welcher eingerichtet ist, um an eine Bohrstangenanordnung (200; 700; 800; 900) gekoppelt und/oder innerhalb der Bohrstangenanordnung (200; 700; 800; 900) angeordnet sind, welche einen Bohrkopf (204) aufweist, welcher eingerichtet ist, um ein Loch (1018) unterhalb einer Oberfläche (1006) zu bohren, wobei der Radarsensor (116; 306; 408; 508) eingerichtet ist, um eine elektromagnetische Welle zu emittieren und ein Echo der elektromagnetischen Welle zu erhalten, um Radardaten zu erzeugen, welche ein oder mehrere Objekte (1002) unter der Oberfläche (1006) darstellen; und
einen Magnetometer-Sensor (114; 304; 406; 506), welcher eingerichtet ist, um einer oder mehrere zu sein, welche an die Bohrstangenanordnung (200; 700; 800; 900) gekoppelt oder innerhalb der Bohrstangenanordnung (200; 700; 800; 900) angeordnet sind,
wobei der Magnetometer-Sensor (114; 304; 406; 506) eingerichtet ist, um Magnetometer-Daten zu erzeugen, welche eine Ausrichtung des Magnetometer-Sensors (114; 304; 406; 506) relativ zu einem Magnetfeld darstellen,
ferner aufweisend eine Rechenanordnung (108), welche eingerichtet ist, um mit dem Radarsensor (116; 306; 408; 508) und dem Magnetometer-Sensor (114; 304; 406; 506) kommunikativ gekoppelt zu sein, **dadurch gekennzeichnet, dass** die Rechenanordnung (108) eingerichtet ist, um Bilddaten auf Grundlage einer Kombination der Radardaten und der Magnetometer-Daten zu erzeugen, wobei die Bilddaten ein Volumen unterhalb der Oberfläche (1006) und außerhalb des Lochs (1018) darstellen.

2. System (100) nach Anspruch 1, wobei die Rechenanordnung (108) eingerichtet ist, um die Bilddaten in zeitlicher Übereinstimmung mit dem Bohrkopf (204) zu erzeugen, welcher das Loch (1018) unterhalb der Oberfläche (1006) bohrt.

3. System (100) nach einem der vorhergehenden Ansprüche, wobei in zeitlicher Abstimmung mit dem Bohrkopf (204), welcher das Loch (1018) unterhalb der Fläche (1006) bohrt, der Radarsensor (116; 306; 408; 508) eingerichtet ist, um die Radardaten zu erzeugen, und der Magnetometer-Sensor (114; 304; 406; 506) eingerichtet ist, um Magnetometer-Daten zu erzeugen.

4. System (100) nach einem der vorhergehenden Ansprüche, ferner aufweisend einen Beschleunigungssensor (114; 304; 406; 506), welcher eingerichtet ist, um einer oder mehrere zu sein, welche an die Bohrstangenanordnung (200; 700; 800; 900) gekoppelt oder innerhalb der Bohrstangenanordnung (200; 700; 800; 900) angeordnet sind, wobei der Beschleunigungssensor (114; 304; 406; 506) eingerichtet ist, um Beschleunigungsdaten zu erzeugen, welche eine Neigung des Beschleunigungssensors (114; 304; 406; 506) darstellen.

5. System (100) nach einem der vorhergehenden Ansprüche, ferner aufweisend ein Einzelgehäuse (205; 302), welches eingerichtet ist, um innerhalb der Bohrstangenanordnung (200; 700; 800; 900) angeordnet zu sein, wobei sowohl der Radarsensor (116; 306; 408; 508) als auch der Magnetometer-Sensor (114; 304; 406; 506) eingerichtet sind, um innerhalb des Einzelgehäuses (205; 302) angeordnet zu sein.

6. System (100) nach einem der vorhergehenden Ansprüche, ferner aufweisend ein erstes Gehäuse (205; 402; 502) und ein zweites Gehäuse (205; 404; 504), welches von dem ersten Gehäuse (205; 402; 502) getrennt ist, wobei das erste und das zweite Gehäuse (205; 402; 404; 502; 504) eingerichtet sind, um innerhalb der Bohrstangenanordnung (200; 700; 800; 900) angeordnet zu sein, wobei der Radarsensor (116; 306; 4018; 508) eingerichtet ist, um innerhalb des ersten Gehäuses (205; 402; 502) angeordnet zu sein, und der Magnetometer-Sensor (114; 304; 406; 506) eingerichtet ist, um innerhalb des zweiten Gehäuses (205; 404; 504) angeordnet zu sein.

7. System (100) nach einem der vorhergehenden Ansprüche, wobei der Radarsensor (116; 306; 4018; 508) und der Magnetometer-Sensor (114; 304; 406; 506) eingerichtet sind, um in dem Loch (1018) und unterhalb der Oberfläche (1006) angeordnet zu sein, während der Radarsensor (116; 306; 4018; 508) die Radardaten erzeugt und der Magnetometer-Sensor (114; 304; 406; 506) die Magnetometer-Daten erzeugt.

8. System (100) nach einem der vorhergehenden Ansprüche, wobei sich die Bohrstangenanordnung (200; 700; 800; 900) zwischen einem distalen Ende (206) und einem proximalen Ende (212) erstreckt, wobei das distale Ende den Bohrkopf (204) aufweist und eingerichtet ist, um das Loch (1018) unterhalb der Fläche (1006) zu bohren, wobei das proximale Ende (212) eingerichtet ist, um mit einem Bohrgestell oberhalb der Oberfläche (1006) wirkverbunden zu sein, wobei sowohl der Radarsensor (116; 306; 408; 508) als auch der Magnetometer-Sensor (114; 304; 406; 506) eingerichtet sind, um sich näher an dem distalen Ende (206) der Bohrstangenanordnung (200; 700; 800; 900) als an dem proximalen Ende (212) der Bohrstangenanordnung (200; 700; 800; 900) zu befinden.

9. Bohrstangenanordnung (200), aufweisend:
einen Bohrkopf (204), welcher eingerichtet ist, um ein Loch unterhalb einer Oberfläche zu bohren; und
ein Gehäuse (205) im Loch, welches eingerichtet ist, um mit dem Bohrkopf gekoppelt zu sein, wobei das Gehäuse im Loch ein System (100) nach einem der vorhergehenden Ansprüche aufweist.

10. Verfahren, umfassend:
Erzeugen von Radardaten, welche ein oder mehrere Objekte (1002) unterhalb einer Oberfläche (1006) zumindest teilweise auf Grundlage eines Echos darstellen, welches durch einen Radarsensor (116; 306; 408; 508) empfangen wird, welcher einer oder mehrere ist, welche an die Bohrstangenanordnung (200; 700; 800; 900) gekoppelt oder innerhalb der Bohrstangenanordnung (200; 700; 800; 900) angeordnet sind, welche einen Bohrkopf (204) aufweist, welcher eingerichtet ist, um ein Loch (1018) unterhalb der Oberfläche (1006) zu bohren; und
Erzeugen von Magnetometer-Daten unter Verwendung eines Magnetometer-Sensors (114; 304; 406; 506), wobei die Magnetometer-Daten durch den Magnetometer-Sensor (114; 304; 406; 506) erzeugt werden, welcher einer oder mehrere ist, welche an die Bohrstangenanordnung (200; 700; 800; 900) gekoppelt oder innerhalb der Bohrstangenanordnung (200; 700; 800; 900) angeordnet sind,
wobei die erzeugten Magnetometer-Daten eine Ausrichtung des Magnetometer-Sensors (114; 304; 406; 506) relativ zu einem Magnetfeld darstellen, **dadurch gekennzeichnet, dass** Bilddaten auf Grundlage einer Kombination der Radardaten und der Magnetometer-Daten erzeugt werden, wobei die Bilddaten ein Volumen unterhalb der Oberfläche (1006) und außerhalb des Lochs (1018) darstellen.

11. Verfahren nach Anspruch 10, wobei die Bilddaten in zeitlicher Übereinstimmung mit dem Bohrkopf (204) erzeugt werden, welcher das Loch (1018) unterhalb der Oberfläche (1006) bohrt.

12. Verfahren nach Anspruch 10 oder 11, ferner umfassend Übermitteln der Radardaten und der Magnetometer-Daten von dem Radarsensor (116; 306; 408; 508) und dem Magnetometer-Sensor (114; 304; 406; 506) an eine Rechenanordnung (108), welche die Bilddaten mittels eines gemeinsamen Kommunikationskanals erzeugt.

13. Verfahren nach einem der Ansprüche 10 bis 12, wobei das Erzeugen der Radardaten und das Erzeugen der Magnetometer-Daten in zeitlicher Übereinstimmung mit dem Bohrkopf (204) erfolgt, welcher das Loch (1018) unterhalb der Oberfläche (1006) bohrt.

## Revendications

1. Système (100) comprenant :
un capteur radar (116; 306; 408; 508) conçu pour être, individuellement ou à plusieurs, accouplé à ou disposé dans un ensemble tige de forage (200; 700; 800; 900) comportant une tête de forage (204) conçue pour forer un trou (1018) sous une surface (1006), le capteur radar (116; 306: 408; 508) étant conçu pour émettre une onde électromagnétique et pour obtenir un écho de l'onde électromagnétique afin de produire des données de radar représentatives d'au moins un objet (1002) sous la surface (1006) ; et
un capteur magnétométrique (114; 304; 406; 506) conçu pour être, individuellement ou à plusieurs, accouplé à ou disposé dans l'ensemble tige de forage (200; 700; 800; 900),
le capteur magnétométrique (114; 304; 406; 506) étant conçu pour produire des données magnétométriques représentatives d'une orientation du capteur magnétométrique (114; 304; 406; 506) par rapport à un champ magnétique,
comprenant en outre un ensemble informatique (108) conçu pour être accouplé de manière communicative au capteur radar (116; 306; 408; 508) et au capteur magnétométrique (114; 304; 406; 506), **caractérisé en ce que** l'ensemble informatique (108) est conçu pour produire des données d'image en fonction d'une combinaison des données de radar et des données magnétométriques, les données d'image étant représentatives d'un volume sous la surface (1006) et à l'extérieur du trou (1018).

2. Le système (100) de la revendication 1, dans lequel l'ensemble informatique (108) est conçu pour produire les données d'image simultanément au forage du trou (1018) sous la surface (1006) au moyen de la tête de forage (204).

3. Le système (100) de l'une quelconque des revendications précédentes, dans lequel le capteur radar (116; 306; 408; 508) est conçu pour produire les données de radar, et le capteur magnétométrique (114; 304; 406; 506) est conçu pour produire les données magnétométriques simultanément au forage du trou (1018) sous la surface (1006) au moyen de la tête de forage (204).

4. Le système (100) de l'une quelconque des revendications précédentes, comprenant en outre un capteur accélérométrique (114; 304; 406; 506) conçu pour être, individuellement ou à plusieurs, accouplé à ou disposé dans l'ensemble tige de forage (200; 700; 800; 900), le capteur accélérométrique (114; 304; 406; 506) étant conçu pour produire des données d'accélération représentatives d'une inclination du capteur accélérométrique (114; 304; 406; 506).

5. Le système (100) de l'une quelconque des revendications précédentes, comprenant en outre une enveloppe unique (205; 302) conçue pour être disposée à l'intérieur de l'ensemble tige de forage (200; 700; 800; 900), le capteur radar (116; 306; 408; 508) et le capteur magnétométrique (114; 304; 406; 506) étant tous les deux conçus pour être disposés à l'intérieur de l'enveloppe unique (205; 302).

6. Le système (100) de l'une quelconque des revendications précédentes, comprenant en outre une première enveloppe (205; 402; 502) et une seconde enveloppe (205; 404; 504) séparée de la première enveloppe (205; 402; 502), les première et seconde enveloppes (205; 402, 404; 502, 504) étant conçues pour être disposées à l'intérieur de l'ensemble tige de forage (200; 700; 800; 900), le capteur radar (116; 306; 408; 508) étant conçu pour être disposé à l'intérieur de la première enveloppe (205; 402; 502) et le capteur magnétométrique (114; 304; 406; 506) étant conçu pour être disposé à l'intérieur de la seconde enveloppe (205; 404; 504).

7. Le système (100) de l'une quelconque des revendications précédentes, dans lequel le capteur radar (116; 306; 408; 508) et le capteur magnétométrique (114; 304; 406; 506) sont conçus pour être disposés dans le trou (1018) et sous la surface (1006) pendant que le capteur radar (116; 306; 408; 508) produit les données de radar et que le capteur magnétométrique (114; 304; 406; 506) produit les données magnétométriques.

8. Le système (100) de l'une quelconque des revendications précédentes, dans lequel l'ensemble tige de forage (200; 700; 800; 900) s'étend entre une extrémité distale (206) et une extrémité proximale (212), l'extrémité distale (206) comprenant la tête de forage (204) et étant conçue pour forer le trou (1018) sous la surface (1006), l'extrémité proximale étant conçue pour être accouplée fonctionnellement à un appareil de forage sur la surface (1006), le capteur radar (116; 306; 408; 508) et le capteur magnétométrique (114; 304; 406; 506) étant tous les deux conçus pour être situés plus près de l'extrémité distale (206) de l'ensemble tige de forage (200; 700; 800; 900) que de l'extrémité proximale (212) de l'ensemble tige de forage (200; 700; 800; 900).

9. Ensemble tige de forage (200) comprenant :
une tête de forage (204) conçue pour forer un trou sous une surface ; et
une enveloppe de fond de trou (205) conçue pour être accouplée à la tête de forage, l'enveloppe de fond de trou comportant un système (100) de l'une quelconque des revendications précédentes.

10. Procédé comprenant :
la production de données de radar représentatives d'au moins un objet (1002) sous une surface (1006) en fonction, au moins en partie, d'un écho reçu par un capteur radar (116; 306; 408; 508) qui est, individuellement ou à plusieurs, accouplé à ou disposé dans un ensemble tige de forage (200; 700; 800; 900) comportant une tête de forage (204) conçue pour forer un trou (1018) sous la surface (1006) ; et
la production de données magnétométriques à l'aide d'un capteur magnétométrique (114; 304; 406; 506), les données magnétométriques étant produites par le capteur magnétométrique (114; 304; 406; 506) qui est, individuellement ou à plusieurs, accouplé à ou disposé dans l'ensemble tige de forage (200; 700; 800; 900),
les données magnétométriques produites étant représentatives d'une orientation du capteur magnétométrique (114; 304; 406; 506) par rapport à un champ magnétique, le procédé étant **caractérisé par** la production de données d'image en fonction d'une combinaison des données de radar et des données magnétométriques, les données d'image étant représentatives d'un volume sous la surface (1006) et à l'extérieur du trou (1018).

11. Le procédé de la revendication 10, dans lequel les données d'image sont produites simultanément au forage du trou (1018) sous la surface (1006) au moyen de la tête de forage (204).

12. Le procédé de l'une quelconque des revendications 10 ou 11, comprenant en outre la communication des données de radar et des données magnétométriques émanant du capteur radar (116; 306; 408; 508) et du capteur magnétométrique (114; 304; 406; 506) à un ensemble informatique (108) destiné à produire les données d'image par l'intermédiaire d'une voie de communication commune.

13. Le procédé de l'une quelconque des revendications 10 à 12, dans lequel la production des données de radar et la production des données magnétométriques ont lieu simultanément au forage du trou (1018) sous la surface (1006) au moyen de la tête de forage (204).
